# EUROPEAN PATENT APPLICATION

(11) **EP 3 132 928 A1**
(43) Date of publication of application: **22.02.2017**
(21) Application number: 16184374.3
(22) Date of filing: 16.08.2016
(51) Int. Cl.: B32B 7/06, B32B 7/12, B32B 9/00, B32B 9/04, B32B 15/10, B32B 15/20, B32B 21/04, B32B 21/14

(54) **HIGH THERMAL CONDUCTIVITY LAYER FOR FIRE RESISTANT WOOD VENEER**

(30) Priority: 18.08.2015 US 201514829109
(71) Applicant: Goodrich Corporation, Charlotte, NC 28217 (US)
(72) Inventor: ST. ROCK, Brian, Andover, CT Connecticut 06232 (US); RANJAN, Ram, West Hartford, CT Connecticut 06117 (US)
(74) Representative: de Bresser, Sara Jean

(57) **Abstract**

A fire resistant wood veneer structure may include a base layer of a non-decorative wood veneer and a layer of non-metallic highly thermal conductivity material adhesively bonded to the non-decorative wood veneer. The finished veneer structure includes a layer of decorative wood veneer adhesively bonded to the non-metallic wood veneer layer.

## Description

### BACKGROUND

This invention relates to laminated wood veneers for aircraft cabin interiors in general and to fire resistant wood veneer structures in particular.

Wood veneers for application in aircraft cabin interiors must pass stringent FAA recommended fire tests for flame propagation and extinguishing before being allowed for use. Current methods for producing fire retardant veneer are chemical based and process intensive. The methods rely on insuring the flame is extinguished by vigorously eliminating the local oxygen in the flame area through chemical reactions. Examples of such processes are applying chemicals that promote the formation of increased char at a lower temperature, chemicals which act as free radical traps in the flame, and chemical coatings on wood surface. Most of the chemical based approaches require costly, process intensive treatment of wood. Furthermore, the variability of wood substrate itself (oil content, density, porosity, etc.) leads to inconsistent results that are difficult to predict.

### SUMMARY

A fire resistant wood veneer structure may include a base layer of a non-decorative wood veneer and a layer of non-metallic high thermal conductivity material adhesively bonded to the non-decorative wood veneer. The finished veneer structure includes a layer of decorative wood veneer adhesively bonded to the non-metallic high thermal conductivity material layer.

In an embodiment, a method of forming a fire resistant wood veneer structure includes forming a base layer of non-decorative wood veneer and adhesively bonding a layer of non-metallic high thermal conductivity material to the base veneer layer. In the next step, a top layer of decorative wood veneer is adhesively bonded to the non-metallic high thermal conductivity layer.

### BRIEF DESCRIPTION OF THE DRAWINGS

FIGS. 1A and 1B are schematic illustrations of prior art aircraft veneer.
FIGS. 2A and 2B are schematic illustrations of prior art fire resistant aircraft veneer.
FIGS. 3A and 3B are schematic illustrations of fire resistant aircraft veneers according to an embodiment of the present invention.
FIGS. 4A and 4B are schematic illustrations of horizontal and vertical Bunsen burner tests according to FAR25.853.
FIG. 5 is a graph showing maximum temperature as a function of time in a horizontal Bunsen burner test for prior art veneer and veneer containing a pyrolytic graphite layer.
FIG. 6 is a graph showing maximum temperature as a function of time in a vertical Bunsen burner test for prior art veneer and veneer containing a pyrolytic graphite layer.

### DETAILED DESCRIPTION

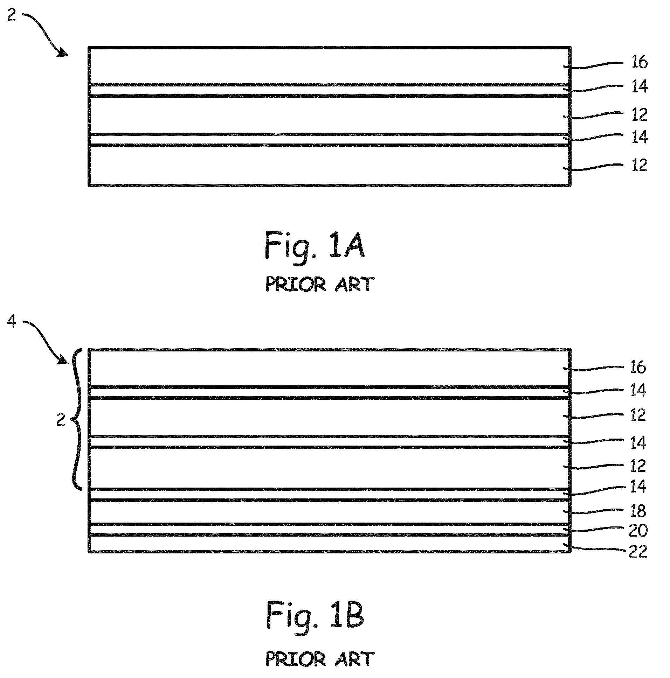

A schematic cross section view of a prior art three ply aircraft wood veneer is shown in FIG. 1A. Wood veneer 2 may comprise non-decorative wood base layer 12 topped with adhesive layer 14. In this embodiment, a second non-decorative wood layer 12 topped with adhesive layer 14 may be added to the first base layer 12 and adhesive layer 14. Veneer 2 may be finished by adding decorative veneer layer 16 to the second adhesive layer 14. Veneer 2 may be pressed to compact the layers and heated to cure the adhesive if the adhesive is thermosetting. In a final process the decorative veneer may be planarized by sanding. In an embodiment, as shown in FIG. 1B, prior art aircraft wood veneer 4 may comprise prior art wood veneer 2 with a layer of aluminum foil 18 adhesively attached to the bottom of non-decorative wood layer 12 by adhesive layer 14. Pressure sensitive adhesive (PSA) layer 20 may be applied to aluminum foil layer 18 to allow aircraft wood veneer 4 to be adhesively attached to a supporting structure. PSA layer 20 may typically include release paper layer 22 which can be peeled away prior to placement on a supporting surface.

Aircraft wood veneers 2 and 4 are examples of a three layer veneer comprising two non-decorative wood layers topped with a decorative wood layer. A preferred non-decorative wood for aircraft veneers is poplar. It is known in the art that the number of layers in a veneer may vary depending on the application and are not limited to the embodiments shown in FIGS. 1A and 1B.

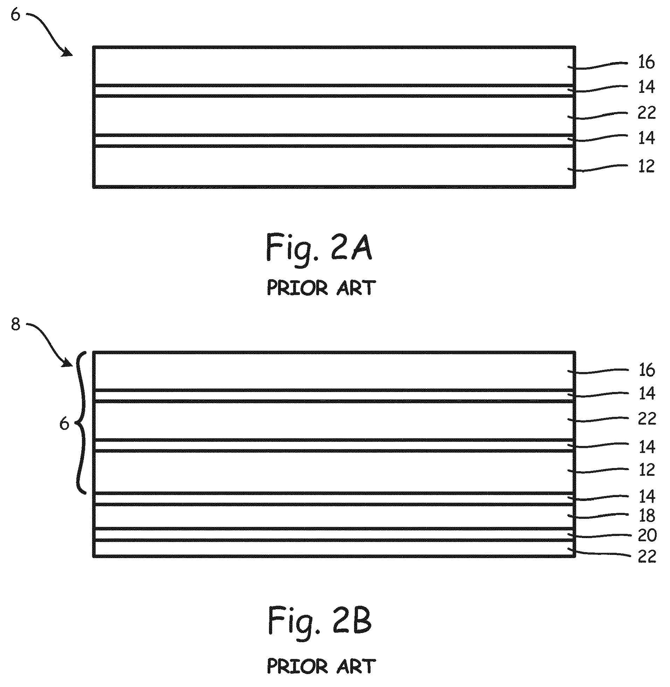

Prior art fire resistant aircraft veneers are taught in U.S. Patent No. 8,038,878 and include a layer of aluminum in the veneer laminate. A prior art three layer fire resistant aircraft veneer is shown in FIG. 2A. Fire resistant veneer 6 comprises non-decorative wood base layer 12 topped with adhesive layer 14. Aluminum layer 22 topped with adhesive layer 14 is adhesively bonded to base layer 12. Fire resistant prior art veneer 6 may be finished by adhesively bonding decorative wood layer 16 to aluminum material layer 22. Veneer 6 may be pressed to compact the layers and heated to cure the adhesive if the adhesive is thermosetting. In a final process, the decorative veneer may be planarized by sanding.

In an embodiment as shown in FIG. 2B, a layer of aluminum foil 18 may be adhesively attached to the bottom of prior art fire resistant wood veneer 6 by adhesive layer 14. Pressure sensitive adhesive (PSA) layer 20 may be applied to aluminum foil layer 18 to allow prior art fire resistant aircraft veneer 6 to be adhesively attached to a supporting structure. PSA layer 20 may typically include release paper layer 22 which can be peeled away prior to placement on a support surface. It is known in the art that the number of layers in a veneer may vary depending on the application and the embodiments shown in FIGS. 2A and 2B are only examples of a large number of possible variations of the design of fire resistant aircraft wood veneers.

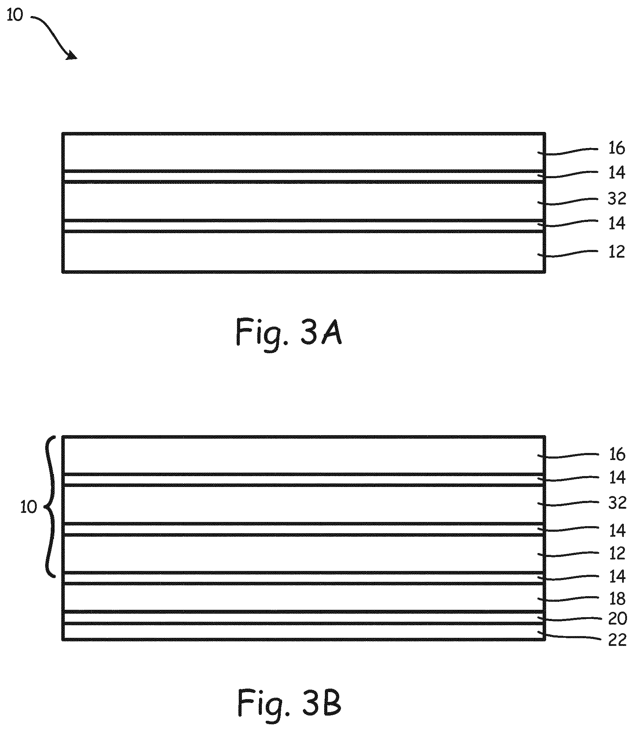

A three layer fire resistant aircraft veneer according to an embodiment of the invention is shown in FIG. 3A. Fire resistant veneer 10 comprises non-decorative wood base veneer 12 topped with adhesive layer 14. Non-metallic high thermal conductivity material 32 topped with a second adhesive layer 14 is adhesively bonded to base layer 12. Fire resistant veneer 10 may be finished by adhesively bonding decorative wood layer 16 to non-metallic high thermal conductivity layer 32. Veneer 10 may be pressed to compact the layers and heated to cure the adhesive if the adhesive is thermosetting. In a final process the decorative veneer may be planarized by sanding.

In an embodiment as shown in FIG. 3B, a layer of aluminum foil 18 may be adhesively attached to the bottom of fire resistant wood veneer 10 by adhesive layer 14. Pressure sensitive adhesive (PSA) layer 20 may be applied to aluminum foil layer 18 to allow fire resistant aircraft veneer 10 to be adhesively attached to a supporting structure. PSA layer 20 may typically include release paper 22 which can be peeled away prior to placement on a support surface. It is known in the art that the number of layers in a veneer may vary depending on the application and the embodiments shown in FIGS. 3A and 3B are only examples of a large number of possible variations of the design of fire resistant aircraft wood veneers.

Candidate light weight high thermal conductivity materials for the invention include pyrolytic graphite, graphine doped adhesives or polymer backing, carbon nanotube doped adhesives or polymer backing, and conventional thin heat pipes or oscillating heat pipes. In an embodiment, the high thermal conductivity material may be pyrolytic graphite, preferably with a thickness of from about 4 mils to 50 mils. The range of thickness for exemplary embodiments of other high thermal conductivity materials may be from about 4 mils to about 50 mils.

Candidate adhesives for the invention include phenolic resin, polyvinyl adhesive, and/or adhesives containing high thermal conductivity particles or fibers such as carbon nanotubes.

As discussed in U.S. Patent No. 8,083,878, the benefits of an aluminum foil backing on aircraft wood veneers include the ease at which many materials can be bonded to the aluminum.

In the embodiments shown in FIGS. 3A and 3B, the aluminum layer in the prior art fire resistant veneer is replaced with lighter and non-metallic high thermal conductivity materials with thermal conductivities exceeding 100 W/mk. As noted in U.S. Patent No. 8,083,878, each additional 1 mil thickness of aluminum sheet adds approximately 0.46 pounds to every standard 48 inch by 96 inch sheet of finished veneer assembly. Since the thickness of the aluminum layer is typically from about 2 mils to about 6 mils in many application, the weight of aluminum in a 48 inch by 96 inch of finished veneer would be from about 0.92 pounds to about 2.76 pounds extra weight per sheet.

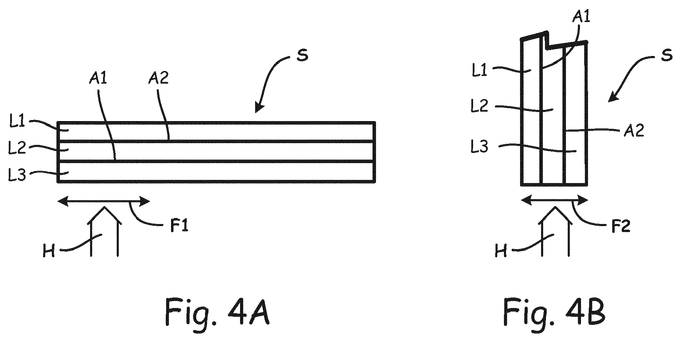

The incorporation of a layer of non-metallic high thermal conductivity material in a wood veneer stack decreases the flammability of the structure by increasing the thermal dissipation (i.e. heat spreading) within the laminated veneer sheet. The benefits associated with the improved thermal dissipation include delayed onset of wood combustion, reduction in the peak wood temperature, and improved cooling after flame removal. The flammability of aircraft wood veneers is determined by standard fire tests as prescribed by FAR25.853. The tests consist of horizontal and vertical Bunsen burner tests. Schematics of a horizontal and vertical FAR25.853 test are shown in FIGS. 4A and 4B respectively. In the horizontal test, veneer sample S with exemplary laminations L1, L2, and L3 and adhesive layers A1 and A2 is shown being subjected to Bunsen burner heat flux H spreading over the sample surface in the direction of arrow F1 near the edge of sample S. In the vertical test, as shown in FIG. 2B, heat flux H is applied over the entire edge of sample S as indicated by arrow F2.

A finite element model was developed to assess the benefits of the configuration of veneers for retarding fire. In the example employed in the three layer veneer shown in FIGS. 3A and 3B, L1, L2, and L3 are material layers and A1 and A2 are adhesive layers. The fire resistance of a baseline prior art veneer sample and a prior art fire resistant veneer sample with an aluminum layer were compared to the fire resistance of a sample as shown in FIG. 3A with a non-metallic high thermal conductivity material layer. The baseline veneer consisted of a 20 mil decorative veneer sheet (L1) glued to a 20 mil poplar veneer sheet (L2) glued to a 20 mil poplar veneer sheet (L3). The prior art fire resistant veneer sheet containing aluminum consisted of a 20 mil decorative veneer sheet (L1) glued to a 4.6 mil aluminum sheet (L2) glued to a 20 mil poplar veneer sheet (L3). The fire resistant high thermal conductivity veneer as shown in FIG. 3A consisted of a 20 mil decorative veneer sheet (L1) glued to a 4 mil pyrolytic graphite sheet (L2) glued to a 20 mil poplar veneer sheet (L3). In all cases, the glue was a polyvinyl adhesive.

Testing conditions are given in the following table:

| Test Conditions | Horizontal Test | Vertical Test |
|---|---|---|
| Burner Heat Flux (W/_{cm}²) | 3.5* | 3.5* |
| Burner Heat Input Area (in²) | 3/8 in ID | 3/8 in ID |
| Burner on-time/Ignition Time(s) | 15 | 12 |
| Max Temperature Limit in Veneer for Flame Prevention (°F) | 500** | 500** |
| Specimen Size (in) | 12x2 | 12x2 |

| | | |
|---|---|---|
| *FAR 25.853 specifications **assumed | | |

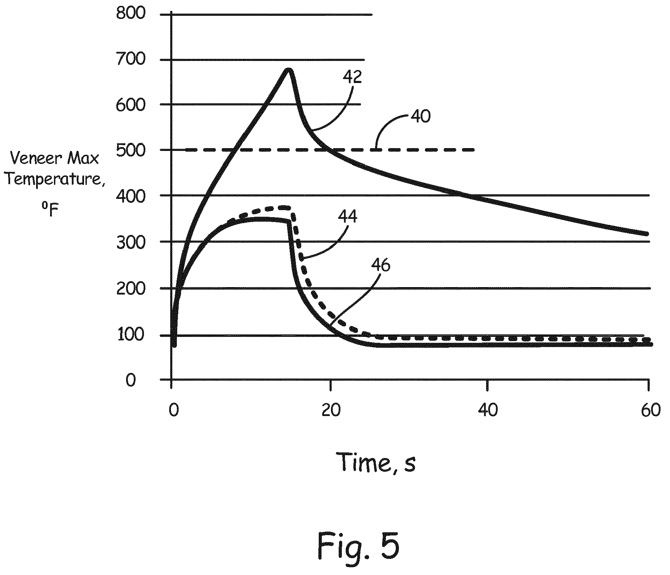

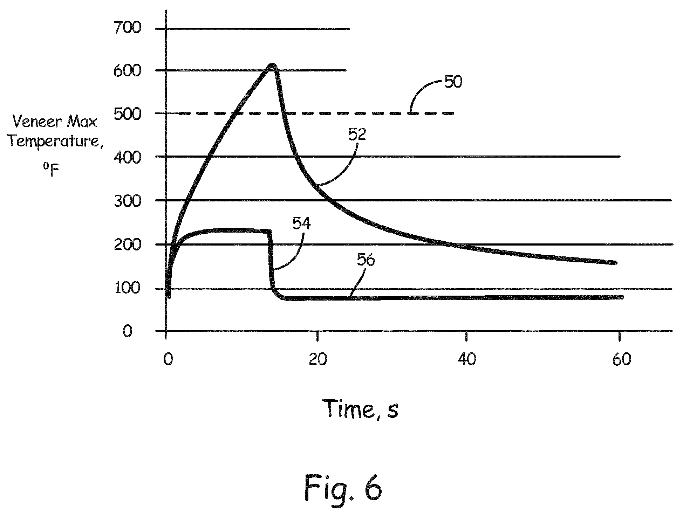

The results for the horizontal and vertical Bunsen burner simulations are shown in FIGS. 5 and 6 respectively. The figures show the maximum temperature in the veneer samples as a function of time for the burner times indicated in the table. Dotted line 40 indicates the (assumed) pyrolysis ignition temperature of the wood in the veneers. In the horizontal Bunsen burner simulations shown in FIG. 5, the temperature in the baseline veneer sample (curve 42) exceeded the pyrolysis ignition temperature of the wood in the veneers and cooled relatively slowly following burner shut off at 15 seconds. The temperature of the prior art sample containing aluminum (curve 44) did not exceed the pyrolysis ignition temperature and cooled to 100°F in a few seconds following burner shut off. In a similar manner, the temperature in the veneer containing pyrolytic graphite (curve 46) never reached the pyrolysis ignition temperature of the wood and cooled even faster than the prior art sample containing aluminum. In addition, graphite adds additional benefits as a fire retardant because it expands and chars, further restricting fire penetration and spreading. In comparison to the prior art veneer containing an aluminum layer of slightly greater thickness, the density of pyrolytic graphite is about one third that of aluminum and the thermal conductivity is about three and a half times higher.

Results of the simulations of the vertical burner tests for the baseline wood veneer, the prior art aluminum containing veneer and the graphite containing veneer of the present invention are shown in FIG. 6. In the vertical Bunsen burner simulations shown in FIG. 6, the temperature in the baseline veneer sample (curve 52) exceeded the pyrolysis ignition temperature (dotted line 50) of the wood in the veneers and cooled relatively slowly following burner shut off at 12 seconds. The temperature curves of the prior art sample containing aluminum and the sample containing pyrolytic graphite were identical (curve 56) and cooled to less than 100°F in a few seconds. In the vertical tests the maximum temperatures were lower and the samples cooled faster (curve position 54) as expected in light of the different geometries of the tests.

### Discussion of Possible Embodiments

The following are nonexclusive descriptions of possible embodiments of the present invention.

A fire resistant wood veneer structure may include a base layer of non-decorative wood veneer; a first layer of adhesive on the non-decorative wood veneer; a layer of non-metallic material with a thermal conductivity greater than 100 W/mk on the adhesive layer; a second layer of adhesive on the non-metallic high thermal conductivity material; and a top layer of decorative wood veneer on the adhesive.

The structure of the preceding paragraph can optionally include, additionally and/or alternatively any, one or more of the following features, configurations and/or additional components:
a layer of aluminum foil may be adhesively attached to a bottom of the base layer of non-decorative wood veneer.

A layer of pressure sensitive adhesive (PSA) may be attached to the aluminum foil, and a layer of release paper may be attached to the PSA layer which may be peeled away prior to placement on a supporting surface.

The non-decorative wood veneer may be poplar.

The non-metallic high thermal conductivity material may be selected from the group consisting of pyrolytic graphite, graphene doped material, carbon nanotube doped material, and conventional thin heat pipes or oscillating heat pipes.

The high thermal conductivity material may be pyrolytic graphite.

The thickness of the pyrolytic graphite layer may be between about 4 mils and about 50 mils.

The adhesive material may comprise phenolic resin, polyvinyl adhesive, and/or adhesives containing high thermal conductivity particles or fibers such as carbon nanotubes.

The first layer of adhesive, the layer of non-metallic high thermal conductivity material on the adhesive layer and the second layer of adhesive may be repeated at least once.

A method of forming a fire resistant wood veneer structure (e.g. a fire resistant wood veneer structure as described herein) may include forming a base layer of non-decorative wood veneer; adding a first layer of adhesive on the base layer; forming a layer of non-metallic material with a thermal conductivity greater than 100 W/mk on the first adhesive layer; forming a second layer of adhesive on the non-metallic high thermal conductivity layer; and forming a top layer of decorative wood veneer on the second adhesive layer to complete a layer structure.

The structure of the preceding paragraph can optionally include, additionally and/or alternatively any, one or more of the following features, configurations and/or additional components:
a third layer of adhesive may be added to a bottom of the base layer of non-decorative wood veneer, and a layer of aluminum foil may be added to the adhesive.

A layer of pressure sensitive adhesive (PSA) may be added to the aluminum foil, and a layer of release paper may be added to the PSA layer which may be peeled away prior to placement on a supporting surface.

The non-decorative wood veneer may be poplar.

The non-metallic high thermal conductivity material may be selected from the group consisting of pyrolytic graphite, graphene doped material, carbon nanotube doped material, and conventional thin heat pipes or oscillating heat pipes.

The non-metallic high thermal conductivity material may be pyrolytic graphite.

The thickness of the pyrolytic graphite may be between about 4 mils and about 50 mils.

The steps of adding the first layer of adhesive to the base layer, adding the layer of non-metallic high thermal conductivity material to the first adhesive layer, and adding the second layer of adhesive to the non-conducting high thermal conductivity material may be repeated at least once.

The adhesive material may comprise phenolic resin, polyvinyl adhesive, and/or adhesives containing high thermal conductivity particles or fibers such as carbon nanotubes.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

Further preferred embodiments are listed below:
1. A fire resistant wood veneer structure comprising:
   a base layer of non-decorative wood veneer;
   a first layer of adhesive on the non-decorative wood veneer;
   a layer of non-metallic material with a thermal conductivity greater than 100 W/mk on the adhesive layer;
   a second layer of adhesive on the non-metallic high thermal conductivity material; and
   a top layer of decorative wood veneer on the adhesive.
2. The fire resistant wood veneer structure of embodiment 1, further comprising a layer of aluminum foil adhesively attached to a bottom of the base layer of non-decorative wood veneer.
3. The fire resistant wood veneer structure of embodiment 2, further comprising a layer of pressure sensitive adhesive (PSA) attached to the aluminum foil, and a layer of release paper attached to the PSA layer which may be peeled away prior to placement on a supporting surface.
4. The fire resistant wood veneer structure of embodiment 1, wherein the non-decorative wood veneer is poplar.
5. The fire resistant layer structure of embodiment 1, wherein the non-metallic high thermal conductivity material is selected from the group consisting of pyrolytic graphite, graphene doped material, carbon nanotube doped material, and conventional thin heat pipes, or oscillating heat pipes.
6. The fire resistant layer wood veneer structure of embodiment 5, wherein the high thermal conductivity material is pyrolytic graphite.
7. The fire resistant wood veneer structure of embodiment 6, wherein the thickness of the pyrolytic graphite layer is between about 4 mils and about 50 mils.
8. The fire resistant wood veneer structure of embodiment 1, wherein the adhesive material comprises phenolic resin, polyvinyl adhesive, and/or adhesives containing high thermal conductivity particles or fibers such as carbon nanotubes.
9. The fire resistant wood veneer structure of embodiment 1 wherein the first layer of adhesive, the layer of non-metallic high thermal conductivity material on the adhesive layer and the second layer of adhesive is repeated at least once.
10. A method of forming a fire resistant wood veneer structure comprising:
   forming a base layer of non-decorative wood veneer;
   adding a first layer of adhesive on the base layer;
   forming a layer of non-metallic material with a thermal conductivity greater than 100 W/mk on the first adhesive layer;
   forming a second layer of adhesive on the non-metallic high thermal conductivity layer; and
   forming a top layer of decorative wood veneer on the second adhesive layer to complete a layer structure.
11. The method of embodiment 10, further comprising adding a third layer of adhesive to a bottom of the base layer of non-decorative wood veneer, and adding a layer of aluminum foil to the adhesive.
12. The method of embodiment 11, comprising adding a layer of pressure sensitive adhesive (PSA) to the aluminum foil, and adding a layer of release paper to the PSA layer which may be peeled away prior to placement on a supporting surface.
13. The method of embodiment 10, wherein the non-decorative wood veneer is poplar.
14. The method of embodiment 10, wherein the non-metallic high thermal conductivity material is selected from the group consisting of pyrolytic graphite, graphene doped material, carbon nanotube doped material, and conventional thin heat pipes or oscillating heat pipes.
15. The method of embodiment 14, wherein the non-metallic high thermal conductivity material is pyrolytic graphite.
16. The method of embodiment 15, wherein the thickness of the pyrolytic graphite is between about 4 mils and about 50 mils.
17. The method of embodiment 10, wherein the steps of adding the first layer of adhesive to the base layer, adding the layer of non-metallic high thermal conductivity material to the first adhesive layer, and adding the second layer of adhesive to the non-conducting high thermal conductivity material are repeated at least once.
18. The method of embodiment 10, wherein the adhesive material comprises phenolic resin polyvinyl adhesive, and/or adhesives containing high thermal conductivity particles or fibers such as carbon nanotubes.

## Claims

1. A fire resistant wood veneer structure comprising:
a base layer of non-decorative wood veneer;
a first layer of adhesive on the non-decorative wood veneer;
a layer of non-metallic material with a thermal conductivity greater than 100 W/mk on the adhesive layer;
a second layer of adhesive on the non-metallic high thermal conductivity material; and
a top layer of decorative wood veneer on the adhesive.

2. The fire resistant wood veneer structure of claim 1, further comprising a layer of aluminum foil adhesively attached to a bottom of the base layer of non-decorative wood veneer, preferably further comprising a layer of pressure sensitive adhesive (PSA) attached to the aluminum foil, and a layer of release paper attached to the PSA layer which may be peeled away prior to placement on a supporting surface.

3. The fire resistant wood veneer structure of claim 1 or claim 2, wherein the non-decorative wood veneer is poplar.

4. The fire resistant layer structure of any one of the preceding claims, wherein the non-metallic high thermal conductivity material is selected from the group consisting of pyrolytic graphite, graphene doped material, carbon nanotube doped material, and conventional thin heat pipes, or oscillating heat pipes, preferably wherein the high thermal conductivity material is pyrolytic graphite.

5. The fire resistant wood veneer structure of any one of the preceding claims, wherein the thickness of the high thermal conductivity material (e.g. pyrolytic graphite) layer is between about 4 mils and about 50 mils.

6. The fire resistant wood veneer structure of any one of the preceding claims, wherein the adhesive material comprises phenolic resin, polyvinyl adhesive, and/or adhesives containing high thermal conductivity particles or fibers such as carbon nanotubes.

7. The fire resistant wood veneer structure of any one of the preceding claims, wherein the first layer of adhesive, the layer of non-metallic high thermal conductivity material on the adhesive layer and the second layer of adhesive is repeated at least once.

8. A method of forming a fire resistant wood veneer structure comprising:
forming a base layer of non-decorative wood veneer;
adding a first layer of adhesive on the base layer;
forming a layer of non-metallic material with a thermal conductivity greater than 100 W/mk on the first adhesive layer;
forming a second layer of adhesive on the non-metallic high thermal conductivity layer; and
forming a top layer of decorative wood veneer on the second adhesive layer to complete a layer structure.

9. The method of claim 8, further comprising adding a third layer of adhesive to a bottom of the base layer of non-decorative wood veneer, and adding a layer of aluminum foil to the adhesive, preferably comprising adding a layer of pressure sensitive adhesive (PSA) to the aluminum foil, and adding a layer of release paper to the PSA layer which may be peeled away prior to placement on a supporting surface.

10. The method of claim 8 or claim 9, wherein the non-decorative wood veneer is poplar.

11. The method of any one of claims 8 to 10, wherein the non-metallic high thermal conductivity material is selected from the group consisting of pyrolytic graphite, graphene doped material, carbon nanotube doped material, and conventional thin heat pipes or oscillating heat pipes.

12. The method of claim 11, wherein the non-metallic high thermal conductivity material is pyrolytic graphite.

13. The method of any one of claims 8 to 12, wherein the thickness of the high thermal conductivity material (e.g. pyrolytic graphite) is between about 4 mils and about 50 mils.

14. The method of any one of claims 8 to 13, wherein the steps of adding the first layer of adhesive to the base layer, adding the layer of non-metallic high thermal conductivity material to the first adhesive layer, and adding the second layer of adhesive to the non-conducting high thermal conductivity material are repeated at least once.

15. The method of any one of claims 8 to 14, wherein the adhesive material comprises phenolic resin polyvinyl adhesive, and/or adhesives containing high thermal conductivity particles or fibers such as carbon nanotubes.
